# EUROPEAN PATENT SPECIFICATION

(11) **EP 4 427 944 B1**
(45) Date of publication and mention of the grant of the patent: **15.10.2025**
(21) Application number: 24157990.3
(22) Date of filing: 16.02.2024
(51) Int. Cl.: B60C 9/22, B60C 11/00, B60C 11/03

(54) **TIRE AND PRODUCTION METHOD FOR TIRE**
REIFEN UND HERSTELLUNGSVERFAHREN FÜR REIFEN
PNEU ET PROCÉDÉ DE PRODUCTION DE PNEU

(30) Priority: 08.03.2023 JP 2023035412
(43) Date of publication of application: 11.09.2024
(73) Proprietor: Sumitomo Rubber Industries, Ltd., Kobe-shi, Hyogo-ken 651-0072 (JP)
(72) Inventor: OSAWA, Takuya, Kobe-shi 651-0072 (JP); KIKUCHI, Hiroshi, Kobe-shi 651-0072 (JP)
(74) Representative: Manitz Finsterwald Patent- und Rechtsanwaltspartnerschaft mbB

(56) References cited:
- EP-A1- 0 319 588
- EP-A1- 2 018 977
- JP-A- 2011 042 301
- JP-A- 2012 006 450

## Description

### TECHNICAL FIELD

The present invention relates to tires and production methods for tires.

### BACKGROUND ART

From the viewpoint of consideration for the environment, reduction of rolling resistance is required for tires that are mounted to vehicles. For example, in PATENT LITERATURE below, tires that can achieve reduction of rolling resistance while preventing a significant decrease in wet performance due to wear, are considered.

### CITATION LIST

### [PATENT LITERATURE]

Japanese Laid-Open Patent Publication No. 2022-154242, JP 2012 006450 A, EP 2 018 977 A1.

### SUMMARY OF THE INVENTION

### [TECHNICAL PROBLEM]

An object of the present invention is to provide a tire that can achieve reduction of rolling resistance without decreasing wet performance.

### [SOLUTION TO PROBLEM]

A tire according to the present invention includes: a tread configured to come into contact with a road surface; a belt located radially inward of the tread; and a band located between the tread and the belt in a radial direction and stacked on the belt. The belt includes a large number of belt cords aligned with each other. Each of the belt cords is tilted relative to a circumferential direction. The band includes a band cord extending substantially in the circumferential direction. The band cord is an organic fiber cord. The band is composed of a helically wound band strip. The band strip is a cord array in which a plurality of the band cords are arranged. A zone from a first end to a second end of the belt is a control zone in which tension of the band cords is controlled. Residual tension of the band cords in the control zone is not less than 15.0 N. The control zone includes a crown zone and a pair of shoulder zones located axially outward of the crown zone. Residual tension of the band cords in the crown zone is higher than residual tension of the band cords in each shoulder zone. a ratio of an equator ground-contact length measured along an equator plane of the tire on a reference ground-contact surface obtained by bringing the tire into contact with a flat road surface with a vertical load, which is 70% of a normal load of the tire, being applied to the tire in a state where the tire is fitted on a normal rim, an internal pressure of the tire is adjusted to a normal internal pressure, and a camber angle of the tire is set to 0°, to a reference ground-contact length at a position corresponding to a width which is 80% of a maximum ground-contact width, is defined as a shape index. The shape index is not less than 1.00 and not greater than 1.30.

### [ADVANTAGEOUS EFFECTS OF THE INVENTION]

According to the present invention, a tire that can achieve reduction of rolling resistance without decreasing wet performance is obtained.

### BRIEF DESCRIPTION OF DRAWINGS

FIG. 1 is a cross-sectional view showing an example of a tire according to one embodiment of the present invention.
FIG. 2 illustrates the configuration of a belt.
FIG. 3 illustrates a profile of the tire shown in FIG. 1.
FIG. 4 is a schematic diagram showing a ground-contact surface shape of the tire.
FIG. 5 is an enlarged cross-sectional view showing a part of the tire.
FIG. 6 is a perspective view showing a band strip used to form a band.
FIG. 7 is a side view showing an example of a forming machine used to form the band.
FIG. 8 illustrates a method for forming the band.
FIG. 9 illustrates an example of a profile of a load applied to the band strip.

### DETAILED DESCRIPTION

The following will describe in detail the present invention based on preferred embodiments with appropriate reference to the drawings.

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cut plane of the tire obtained by cutting the tire along a plane including a rotation axis. In this measurement, the tire is set such that the distance between right and left beads is equal to the distance between the beads in the tire that is fitted on the normal rim. The configuration of the tire that cannot be confirmed in a state where the tire is fitted on the normal rim is confirmed in the above-described cut plane.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a green tire is an uncrosslinked tire. The green tire is also referred to as raw cover. The tire is obtained by vulcanizing a green tire. The green tire is vulcanized by heating and pressurizing the green tire in a mold. The tire is a crosslinked molded product of the green tire.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

In the present invention, residual tension of a band cord is obtained from a band, which is a component of the tire, in the following manner.
(1) A band test piece having a width of 10 mm is sampled from the band of a new tire, and the length of the band test piece is measured.
(2) The band test piece is humidity-controlled for 21 to 27 hours in an atmosphere adjusted to have a temperature of 18 to 22°C and a humidity of 61 to 69%, and the length of the band test piece is measured after the humidity control. The amount of change in the length of the band test piece before and after the humidity control is obtained.
(3) A band cord is sampled from the band test piece whose length was measured after humidity control, and a tensile test of the band cord is conducted in accordance with JIS L 1017 to obtain a stress-strain curve of the band cord.
(4) In the stress-strain curve of the band cord, the stress corresponding to the amount of change in the length of the band test piece before and after the humidity control is obtained. This stress is residual tension per band cord.

In the present invention, the residual tension of the band cord is represented as the residual tension per band cord.

In the present invention, an elongation rate under constant load of an organic fiber cord is represented as an elongation rate under constant load, obtained in accordance with JIS L 1017.

### [Findings on Which Present Invention Is Based]

According to intensive studies by the present inventors, the following circumstances have become clear regarding the technology for reducing the rolling resistance of tires.

A tread includes a cap portion and a base portion. The cap portion has a tread surface which comes into contact with a road surface. Normally, for the cap portion, importance is placed on grip performance rather than on low heat generation properties. The base portion is located radially inward of the cap portion. For the base portion, a crosslinked rubber that has low heat generation properties is used.

If a crosslinked rubber for which low heat generation properties are taken into consideration is used for the cap portion, the rolling resistance of a tire can be reduced. However, grip performance on a wet road surface (hereinafter, referred to as wet performance) is decreased.

For tires, low rolling resistance and good wet performance are required. Establishment of a technology capable of achieving reduction of rolling resistance without decreasing wet performance is required.

A belt is located radially inward of the tread. The belt includes a large number of belt cords aligned with each other. Each belt cord is tilted relative to the equator plane.

At the tread of a running tire, a ground-contact state and a non-ground-contact state are repeated. When the tread comes into contact with a road surface, the belt is bent, and when the tread becomes separated from the road surface, the belt becomes restored.

The present inventors have conducted intensive studies focusing on the movement of the belt. As a result, the present inventors have found that the tilt angle of each belt cord changes in accordance with the movement of the belt, that a tire having a larger change in the tilt angle tends to have higher rolling resistance, that the change in the tilt angle depends on the holding force of a band, and that the change in the tilt angle can be suppressed if the tension of a band cord which has been conventionally adjusted by applying a load of less than 15.0 N is increased, so that there is a possibility that reduction of rolling resistance can be achieved. Thus, the present inventors have completed the invention described below.

### [Outline of Embodiments of Present Invention]

A tire according to one aspect of the present invention is a tire including: a tread configured to come into contact with a road surface; a belt located radially inward of the tread; and a band located between the tread and the belt in a radial direction and stacked on the belt, wherein the belt includes a large number of belt cords aligned with each other, each of the belt cords is tilted relative to a circumferential direction, the band includes a band cord extending substantially in the circumferential direction, the band cord is an organic fiber cord, the band is composed of a helically wound band strip, the band strip is a cord array in which a plurality of the band cords are arranged, a zone from a first end to a second end of the belt is a control zone in which tension of the band cords is controlled, residual tension of the band cords in the control zone is not less than 15.0 N, the control zone includes a crown zone and a pair of shoulder zones located axially outward of the crown zone, residual tension of the band cords in the crown zone is higher than residual tension of the band cords in each shoulder zone, a ratio of an equator ground-contact length measured along an equator plane of the tire on a reference ground-contact surface obtained by bringing the tire into contact with a flat road surface with a vertical load, which is 70% of a normal load of the tire, being applied to the tire in a state where the tire is fitted on a normal rim, an internal pressure of the tire is adjusted to a normal internal pressure, and a camber angle of the tire is set to 0°, to a reference ground-contact length at a position corresponding to a width which is 80% of a maximum ground-contact width, is defined as a shape index, and the shape index is not less than 1.00 and not greater than 1.30.

By forming the tire as described above, the tire can achieve reduction of rolling resistance without decreasing wet performance.

Preferably, a ratio of the residual tension of the band cords in each shoulder zone to the residual tension of the band cords in the crown zone is not less than 0.50.

Preferably, the residual tension of the band cords in the crown zone is not greater than 50 N.

Preferably, an elongation rate under constant load of the band cord, obtained in accordance with JIS L 1017, is not less than 1.9% and not greater than 8.4%.

Preferably, a width in an axial direction of each shoulder zone is not less than 1/8 and not greater than 3/8 of a width in the axial direction of the control zone.

A production method for a tire according to one aspect of the present invention is a method for producing a tire including a tread configured to come into contact with a road surface, a belt located radially inward of the tread, and a band located between the tread and the belt in a radial direction and covering the belt, the method including the steps of: preparing a green tire for the tire; and vulcanizing the green tire, wherein, in the green tire preparation step, the band is formed by helically winding a belt-shaped band strip onto the belt while applying a load to the band strip, the band strip is a cord array in which a plurality of band cords are arranged, a zone from a first end to a second end of the belt is a control zone in which tension of the band cords is controlled, a load applied to the band cords in the control zone is not less than 15.0 N, the control zone includes a crown zone and a pair of shoulder zones located axially outward of the crown zone, and a load applied to the band cords in the crown zone is higher than a load applied to the band cords in each shoulder zone.

By arranging the production method for a tire as described above, a tire that can achieve reduction of rolling resistance without decreasing wet performance, is obtained.

### [Details of Embodiments of Present Invention]

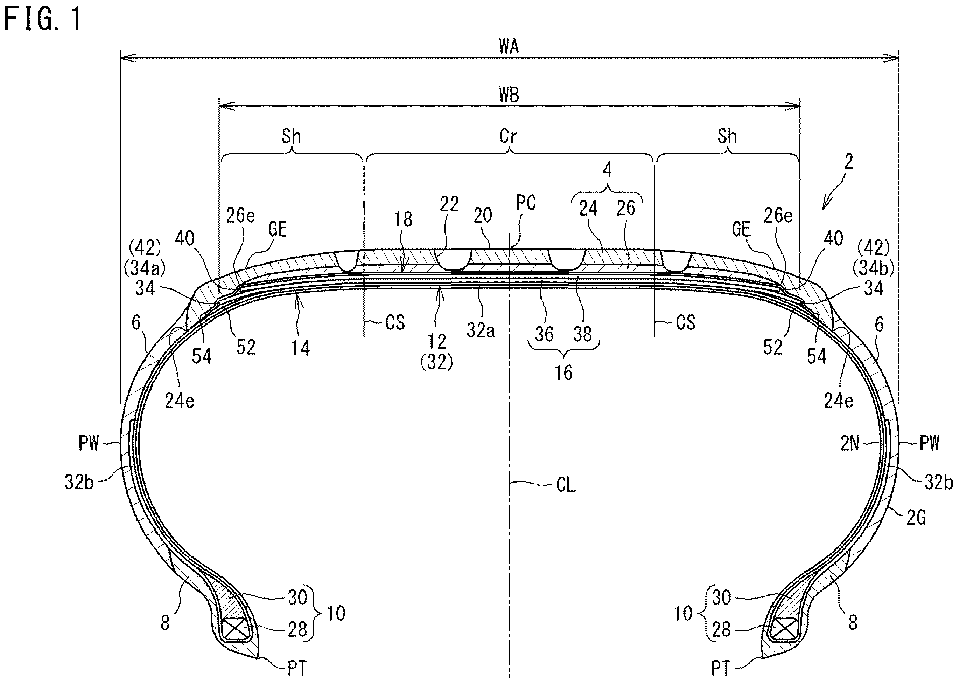

FIG. 1 shows an example of a tire 2 according to an embodiment of the present invention. The tire 2 is a pneumatic tire for a passenger car.

FIG. 1 shows a part of a cross-section (hereinafter, referred to as meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, each position indicated by reference sign PT is a toe of the tire 2. The toe PT is a boundary between an outer surface 2G and an inner surface 2N of the tire 2.

In FIG. 1, a position indicated by reference sign PC is the point of intersection of the outer surface 2G (specifically, tread surface described later) of the tire 2 and the equator plane CL. The point of intersection PC is also referred to as the equator of the tire 2. In the case where a groove is located on the equator plane CL, the equator PC is specified on the basis of a virtual outer surface obtained on the assumption that no groove is provided thereon. The equator PC is also the radially outer end of the tire 2.

In FIG. 1, each position indicated by reference sign PW is an axially outer end of the tire 2. In the case where decorations such as patterns and letters are present on the outer surface 2G, the axially outer end PW (hereinafter, also referred to as outer end PW) is specified on the basis of a virtual outer surface obtained on the assumption that the decorations are not present.

In FIG. 1, a length indicated by a double-headed arrow WA is the cross-sectional width (see JATMA or the like) of the tire 2. The cross-sectional width WA is the distance in the axial direction from a first outer end PW to a second outer end PW. The cross-sectional width WA is the maximum width of the tire 2, and each outer end PW is a position (hereinafter, referred to as maximum width position) at which the tire 2 has the maximum width WA. The cross-sectional width WA is specified in the tire 2 in the normal state.

The tire 2 includes a tread 4, a pair of sidewalls 6, a pair of clinches 8, a pair of beads 10, a carcass 12, an inner liner 14, a belt 16, and a band 18 as components thereof.

The tread 4 comes into contact with a road surface at a tread surface 20 thereof. The tread 4 has the tread surface 20 which comes into contact with a road surface. The tread surface 20 has a radially outwardly convex shape.

Grooves 22 are formed on the tread 4. Accordingly, a tread pattern is formed.

In FIG. 1, each position indicated by reference sign GE is a reference ground-contact position of the tire 2. The reference ground-contact position GE is a position, on the tread surface 20, corresponding to an axially outer end (hereinafter, also referred to as ground-contact end) of a reference ground-contact surface described later.

The reference ground-contact surface is obtained, for example, using a ground-contact surface shape measuring device (not shown). The reference ground-contact surface is obtained by bringing the tire 2 into contact with a flat road surface (flat surface) with a vertical load, which is 70% of a normal load of the tire 2, being applied to the tire 2 in a state where the tire 2 is fitted on a rim (normal rim), the internal pressure of the tire 2 is adjusted to a normal internal pressure, and the camber angle of the tire 2 is set to 0°, on this device.

By a known method, which is not described in detail, an image of the reference ground-contact surface formed when the tire 2 is brought into contact with the flat surface is obtained. The contour of the reference ground-contact surface is specified on the basis of the obtained image.

The contour of the reference ground-contact surface is obtained by tracing the periphery of the reference ground-contact surface in the image of the reference ground-contact surface. If the periphery of the reference ground-contact surface is interrupted by a groove, the contour of the reference ground-contact surface is traced by connecting the interrupted portion with a straight line. Thus, the contour of the reference ground-contact surface, that is, the ground-contact surface shape of the reference ground-contact surface, is obtained.

The tread 4 includes a cap portion 24 and a base portion 26.

The cap portion 24 includes the tread surface 20. The cap portion 24 comes into contact with a road surface. The cap portion 24 is formed from a crosslinked rubber for which wear resistance and grip performance are taken into consideration.

The base portion 26 is located radially inward of the cap portion 24. Each end 26e of the base portion 26 is located axially inward of an end 24e of the cap portion 24. The entirety of the base portion 26 is covered with the cap portion 24. The base portion 26 is formed from a crosslinked rubber that has low heat generation properties.

Each sidewall 6 is connected to an end of the tread 4. The sidewall 6 is located radially inward of the tread 4. The sidewall 6 is formed from a crosslinked rubber for which cut resistance is taken into consideration.

Each clinch 8 is located radially inward of the sidewall 6. The clinch 8 comes into contact with a rim. The clinch 8 is formed from a crosslinked rubber for which wear resistance is taken into consideration.

Each bead 10 is located axially inward of the clinch 8. The bead 10 is located radially inward of the sidewall 6.

The bead 10 includes a core 28 and an apex 30. The core 28 extends in the circumferential direction. The core 28 includes a steel wire which is not shown. The apex 30 is located radially outward of the core 28. The apex 30 is tapered radially outward. The apex 30 is formed from a crosslinked rubber that has high stiffness.

The carcass 12 is located inward of the tread 4, the pair of sidewalls 6, and the pair of clinches 8. The carcass 12 extends on and between a first bead 10 and a second bead 10 which are the pair of beads 10.

The carcass 12 includes at least one carcass ply 32. The carcass 12 of the tire 2 is composed of one carcass ply 32 in consideration of reduction of rolling resistance.

The carcass ply 32 includes a ply body 32a and a pair of turned-up portions 32b. The ply body 32a extends between the first bead 10 and the second bead 10. The respective turned-up portions 32b are connected to the ply body 32a and turned up from the inner side toward the outer side in the axial direction at the respective beads 10.

The carcass ply 32 includes a large number of carcass cords aligned with each other, which are not shown. These carcass cords intersect the equator plane CL. The carcass 12 of the tire 2 has a radial structure. In the tire 2, a cord formed from an organic fiber is used as each carcass cord. Examples of the organic fiber include nylon fibers, rayon fibers, polyester fibers, and aramid fibers.

The inner liner 14 is located inward of the carcass 12. The inner liner 14 forms the inner surface 2N of the tire 2. The inner liner 14 is formed from a crosslinked rubber that has low gas permeability. The inner liner 14 maintains the internal pressure of the tire 2.

The belt 16 is located radially inward of the tread 4. The belt 16 is located between the tread 4 and the carcass 12 in the radial direction. The belt 16 is stacked on the carcass 12.

In FIG. 1, a length indicated by a double-headed arrow WB is the width in the axial direction of the belt 16. The width WB in the axial direction is represented as the distance in the axial direction from a first end 34a to a second end 34b of the belt 16.

The width WB in the axial direction of the belt 16 is not less than 70% and not greater than 90% of the cross-sectional width WA of the tire 2. The above-described equator plane CL intersects the belt 16 at the center of the width WB in the axial direction of the belt 16.

The belt 16 includes an inner layer 36 and an outer layer 38. The inner layer 36 and the outer layer 38 are aligned in the radial direction. The inner layer 36 is located radially inward of the outer layer 38, and is stacked on the carcass 12. The outer layer 38 is located radially inward of the inner layer 36, and is stacked on the inner layer 36.

One or more layers may be provided between the inner layer 36 and the outer layer 38. From the viewpoint of weight reduction, the belt 16 is preferably composed of the inner layer 36 and the outer layer 38.

As shown in FIG. 1, each end 40 of the outer layer 38 is located axially inward of an end 42 of the inner layer 36. The outer layer 38 is narrower than the inner layer 36. The length from the end 40 of the outer layer 38 to the end 42 of the inner layer 36 is not less than 3 mm and not greater than 10 mm. The above-described width WB in the axial direction of the belt 16 is represented as the width in the axial direction of the wide inner layer 36. Each end 42 of the inner layer 36 is an end 34 of the belt 16.

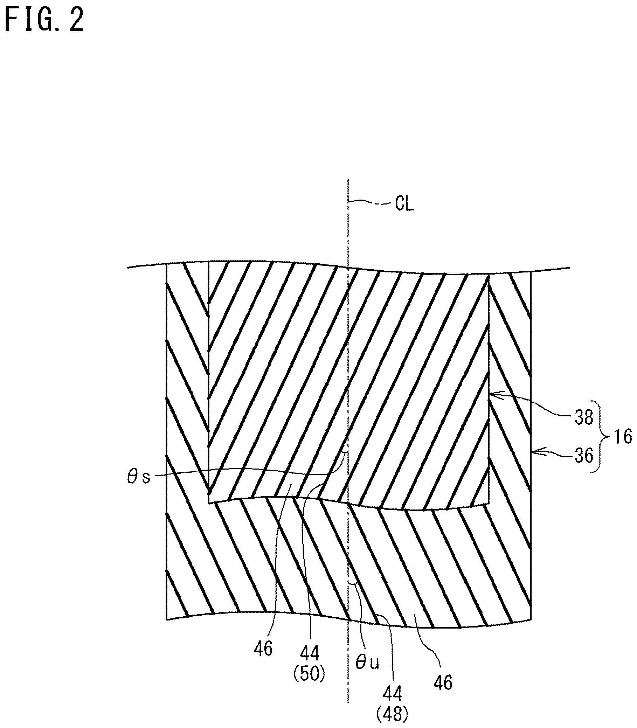

FIG. 2 is a schematic diagram illustrating the configuration of the belt 16. Each of the inner layer 36 and the outer layer 38 of the belt 16 includes a large number of belt cords 44 aligned with each other. Each belt cord 44 is tilted relative to the equator plane CL. The material of the belt cord 44 is steel. The belt cord 44 is a steel cord.

In FIG. 2, for the convenience of description, each belt cord 44 is represented by a solid line, but the belt cords 44 are covered with a topping rubber 46.

In FIG. 2, an angle θu is an angle of each belt cord 44 (hereinafter, also referred to as inner belt cord 48) included in the inner layer 36, with respect to the equator plane CL, that is, a tilt angle of the inner belt cord 48. The tilt angle θu of the inner belt cord 48 of the tire 2 is not less than 19 degrees and not greater than 30 degrees.

In FIG. 2, an angle θs is an angle of each belt cord 44 (hereinafter, also referred to as outer belt cord 50) included in the outer layer 38, with respect to the equator plane CL, that is, a tilt angle of the outer belt cord 50. The tilt angle θs of the outer belt cord 50 of the tire 2 is not less than 19 degrees and not greater than 30 degrees.

The direction of tilt of the inner belt cord 48 is opposite to that of the outer belt cord 50. In the belt 16 of the tire 2, the tilt angle θu of the inner belt cord 48 is equal to the tilt angle θs of the outer belt cord 50. The tilt angle of each belt cord 44 is not less than 19 degrees and not greater than 30 degrees.

As shown in FIG. 1, in the tire 2, a cushion layer 52 can be further provided between each end 34 of the belt 16 and the carcass 12. The cushion layer 52 is formed from a crosslinked rubber that has low stiffness. In the tire 2, the cushion layer 52 is not an essential component. Depending on the specifications of the tire 2, the cushion layer 52 may not necessarily be provided.

The band 18 is located between the tread 4 and the belt 16 in the radial direction. The band 18 is stacked on the belt 16.

As shown in FIG. 1, each end 54 of the band 18 is located axially outward of the end 42 of the inner layer 36, that is, the end 34 of the belt 16. The length from the end 34 of the belt 16 to the end 54 of the band 18 is not less than 3 mm and not greater than 7 mm.

The band 18 overlaps the entire belt 16 in the radial direction. The band 18 is also referred to as full band. The band 18 of the tire 2 is composed of a full band. The band 18 intersects the equator plane CL at the center of the width in the axial direction thereof.

The band 18 includes a helically wound band cord. The band 18 has a jointless structure. The band cord extends substantially in the circumferential direction. Specifically, an angle of the band cord with respect to the circumferential direction is not greater than 5 degrees and preferably not greater than 2 degrees.

The band cord is a cord (hereinafter, referred to as organic fiber cord) formed from an organic fiber. Examples of the organic fiber include nylon fibers, rayon fibers, polyester fibers, and aramid fibers. A hybrid cord including a single yarn formed from a nylon fiber and a single yarn formed from an aramid fiber may be used as the band cord.

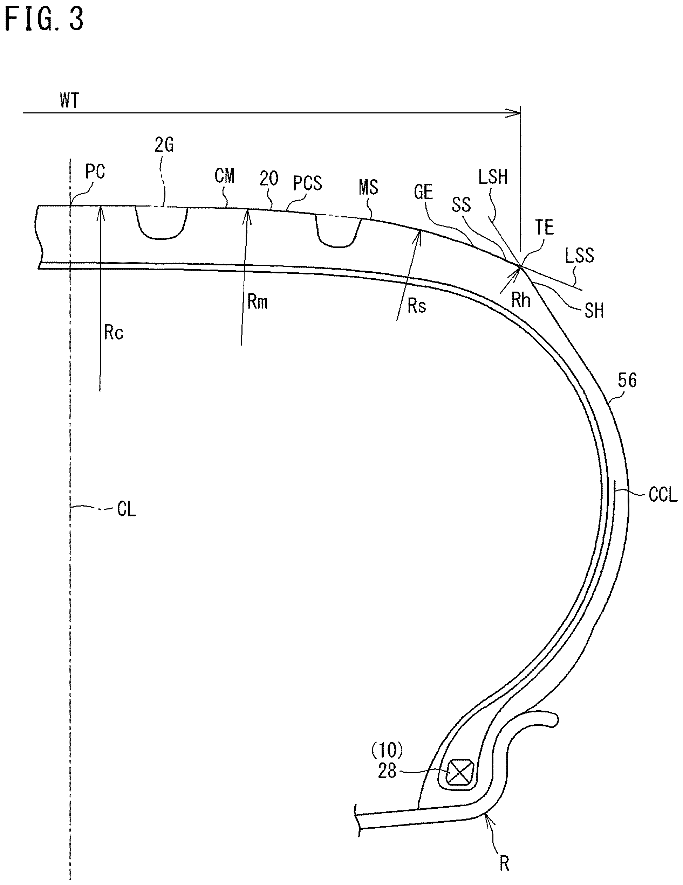

FIG. 3 shows a part of a contour line of the outer surface 2G in a meridian cross-section of the tire 2. In FIG. 3, the tire 2 is fitted on a rim R. The rim R is a normal rim. In FIG. 3, a solid line indicated by reference sign CCL is a contour line of the carcass 12.

The contour line of the outer surface 2G is represented by a virtual outer surface obtained on the assumption that no grooves and no decorations such as patterns and letters are present thereon.

Although not described in detail, in the present invention, the contour line of the outer surface 2G is obtained by measuring the outer surface shape of the tire 2 in the normal state, for example, using a displacement sensor. The contour line of the outer surface 2G may be specified on the basis of the shape of the cavity surface, of a mold (not shown), which shapes the outer surface 2G of the tire 2.

The outer surface 2G of the tire 2 includes the above-described tread surface 20 and a pair of side surfaces 56 connected to the tread surface 20.

In the meridian cross-section, a contour line of the tread surface 20 includes a plurality of arcs aligned in the axial direction. The contour line of the tread surface 20 shown in FIG. 3 is composed of a plurality of arcs aligned in the axial direction.

Among the plurality of arcs, the arc located on each outer side in the axial direction is a shoulder arc. In FIG. 3, an arrow indicated by reference sign Rh represents the radius of the shoulder arc. The shoulder arc has the smallest radius Rh among the plurality of arcs included in the contour line of the tread surface 20. A contour line of the above-described side surface 56 is connected to the shoulder arc.

A position indicated by reference sign SS is the boundary between the shoulder arc and an arc (third arc described later) located adjacent to the shoulder arc. A straight line LSS is a tangent line that is tangent to the shoulder arc at the boundary SS.

A position indicated by reference sign SH is the boundary between the shoulder arc and the contour line of the side surface 56. A straight line LSH is a tangent line that is tangent to the shoulder arc at the boundary SH.

Reference sign TE is the point of intersection of the tangent line LSS and the tangent line LSH. In the present invention, the point of intersection TE is a reference end of the tread 4. A length indicated by a double-headed arrow WT is the distance in the axial direction from a first reference end TE to a second reference end TE. In the present invention, the distance WT in the axial direction is the width of the tread 4.

In the tire 2, the ratio (WT/WA) of the width WT of the tread 4 to the cross-sectional width WA of the tire 2 is not less than 75% and not greater than 95%.

The contour line of the tread surface 20 includes at least three arcs between a pair of shoulder arcs, that is, a first shoulder arc and a second shoulder arc (not shown). The contour line of the tread surface 20 shown in FIG. 3 includes five arcs between the first shoulder arc and the second shoulder arc.

Among the five arcs, the arc located at the center in the axial direction is a first arc. In FIG. 3, an arrow indicated by reference sign Rc represents the radius of the first arc. The first arc passes through the equator PC. Although not shown, the center of the first arc is located on the equator plane CL.

Each arc located adjacent to the first arc is a second arc. The second arc is located axially outward of the first arc, and is connected to the first arc. In FIG. 3, an arrow indicated by reference sign Rm represents the radius of the second arc. A position indicated by reference sign CM is the boundary between the first arc and the second arc. The second arc of the tire 2 is tangent to the first arc at the boundary CM.

The arc located adjacent to each second arc is a third arc. The third arc is located axially outward of the second arc, and is connected to the second arc. In FIG. 3, an arrow indicated by reference sign Rs represents the radius of the third arc. A position indicated by reference sign MS is the boundary between the second arc and the third arc. The third arc of the tire 2 is tangent to the second arc at the boundary MS.

The arc located adjacent to each third arc is the above-described shoulder arc. The shoulder arc is tangent to the third arc at the boundary SS.

The contour line of the tread surface 20 includes the first arc, a pair of the second arcs, a pair of the third arcs, and a pair of the shoulder arcs. The radius Rm of each second arc is smaller than the radius Rc of the first arc. The radius Rs of each third arc is smaller than the radius Rm of each second arc. The radius Rh of each shoulder arc is smaller than the radius Rs of each third arc.

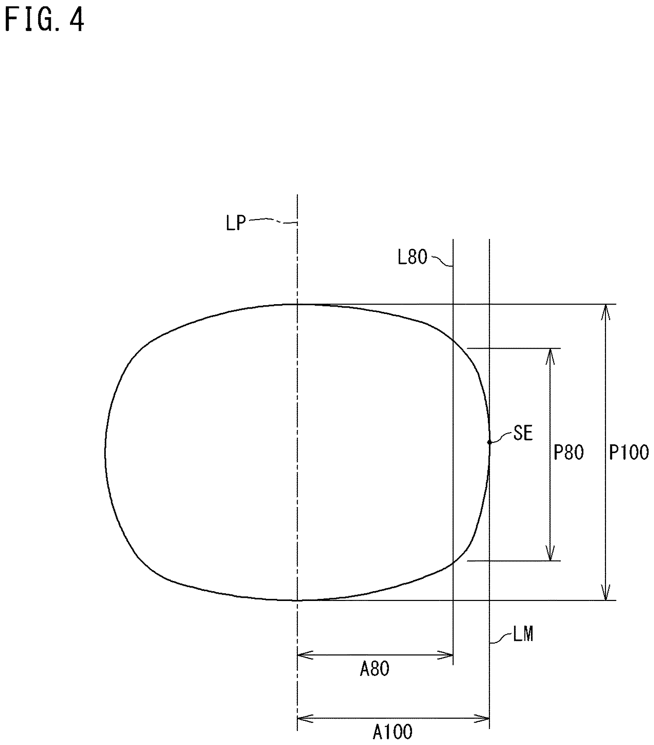

FIG. 4 shows the contour of the reference ground-contact surface of the tire 2. In FIG. 4, the up-down direction corresponds to the circumferential direction of the tire 2, and the right-left direction corresponds to the axial direction of the tire 2. The direction perpendicular to the surface of the drawing sheet of FIG. 4 corresponds to the radial direction of the tire 2.

In FIG. 4, an alternate long and short dash line LP is a straight line, corresponding to the equator plane CL of the tire 2, on the reference ground-contact surface. If it is difficult to specify the equator plane CL on the reference ground-contact surface, a center line in the axial direction of the reference ground-contact surface is used as the straight line corresponding to the equator plane CL. A double-headed arrow P100 represents the length of the line of intersection of the reference ground-contact surface and a plane including the straight line LP. In the tire 2, the length P 100 of the line of intersection is an equator ground-contact length measured along the equator plane CL on the reference ground-contact surface.

In FIG. 4, a position indicated by reference sign SE is an axially outer end of the reference ground-contact surface, in other words, a ground-contact end of the reference ground-contact surface. A position, on the outer surface of the tread 4, corresponding to the ground-contact end SE is the above-described reference ground-contact position GE.

A solid line LM is a straight line that passes through the ground-contact end SE and that is parallel to the straight line LP. A solid line L80 is a straight line that is located between the straight line LM and the straight line LP and that is parallel to the straight line LM and the straight line LP. A double-headed arrow A100 represents the distance in the axial direction from the straight line LP to the straight line LM. The distance A100 corresponds to half the maximum width of the reference ground-contact surface, that is, the maximum ground-contact width. A double-headed arrow A80 represents the distance in the axial direction from the straight line LP to the straight line L80. In FIG. 4, the ratio of the distance A80 to the distance A100 is set to 80%. That is, the straight line L80 represents a position, on the reference ground-contact surface, corresponding to a width that is 80% of the maximum ground-contact width. A double-headed arrow P80 represents the length of the line of intersection of the reference ground-contact surface and a plane including the straight line L80. In the tire 2, the length P80 of the line of intersection is a reference ground-contact length at the position, on the reference ground-contact surface, corresponding to the width that is 80% of the maximum ground-contact width.

A shape index F represented by the ratio (P100/P80) of the equator ground-contact length P100 to the reference ground-contact length P80 is obtained by specifying the equator ground-contact length P100 and the reference ground-contact length P80 on the reference ground-contact surface shown in FIG. 4. The shape index F having a larger value represents that the reference ground-contact surface has a more rounded contour.

As described later, in the present invention, the tension of the band cord is controlled in a zone from the first end 34a to the second end 34b of the belt 16. The zone from the first end 34a to the second end 34b of the belt 16 is a control zone in which the tension of the band cord is controlled.

The control zone is divided into three zones. The control zone is composed of a crown zone Cr and a pair of shoulder zones Sh. Each shoulder zone Sh is located axially outward of the crown zone Cr.

In FIG. 1, each solid line CS extending in the radial direction represents the boundary between the crown zone Cr and the shoulder zone Sh. The zone from each end 34 of the belt 16 to the boundary CS near the end 34 of the belt 16 is the shoulder zone Sh. The zone between a first boundary CS and a second boundary CS is the crown zone Cr.

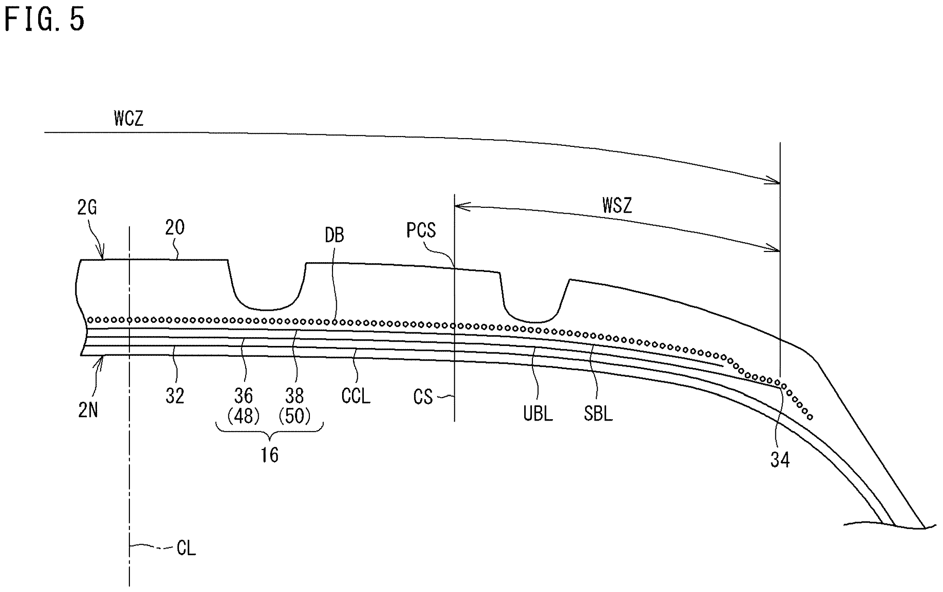

FIG. 5 is an enlarged cross-sectional view showing a part of the tire 2 shown in FIG. 1. FIG. 5 shows a part of a tread portion.

In FIG. 5, a solid line indicated by reference sign UBL represents the inner belt cord 48 included in the belt 16. A solid line indicated by reference sign SBL represents the outer belt cord 50. Each circle indicated by reference sign DB represents the band cord included in the band 18. A position indicated by reference sign PCS is the point of intersection of the tread surface 20 and the boundary CS. The point of intersection PCS is a position, on the tread surface 20, corresponding to the boundary CS between the crown zone Cr and the shoulder zone Sh. The point of intersection PCS is also referred to as boundary corresponding position.

As described above, the width WB in the axial direction of the belt 16 of the tire 2 is represented as the width in the axial direction of the inner layer 36. The inner belt cord 48 extends between the first end 34a and the second end 34b of the belt 16. The inner belt cord 48 is tilted relative to the equator plane CL. The solid line UBL representing the inner belt cord 48 represents an axial component of the inner belt cord 48 projected onto the meridian cross-section of the tire 2.

In FIG. 5, a length indicated by a double-headed arrow WCZ is the width in the axial direction of the control zone.

In the present invention, the width WCZ in the axial direction of the control zone is represented as the length of the axial component of the inner belt cord 48.

In FIG. 5, a length indicated by a double-headed arrow WSZ is the width in the axial direction of the shoulder zone. The width WSZ in the axial direction is represented as the length, from the end 34 of the inner belt cord 48 to the boundary CS, measured along the axial component of the inner belt cord 48.

In the tire 2, the width WSZ in the axial direction of each shoulder zone Sh is not less than 1/8 and not greater than 3/8 of the width WCZ in the axial direction of the control zone.

Next, a method for producing the tire 2 will be described. In the production of the tire 2, an unvulcanized tire 2, that is, a green tire for the tire 2 shown in FIG. 1, is prepared by combining components such as the tread 4, the belt 16, and the band 18. The production method for the tire 2 includes a step of preparing the green tire for the tire 2.

The band 18 is formed in the green tire preparation step. Other than the formation of the band 18, the preparation step is performed in the same manner as a conventional preparation step, and thus the detailed description is omitted.

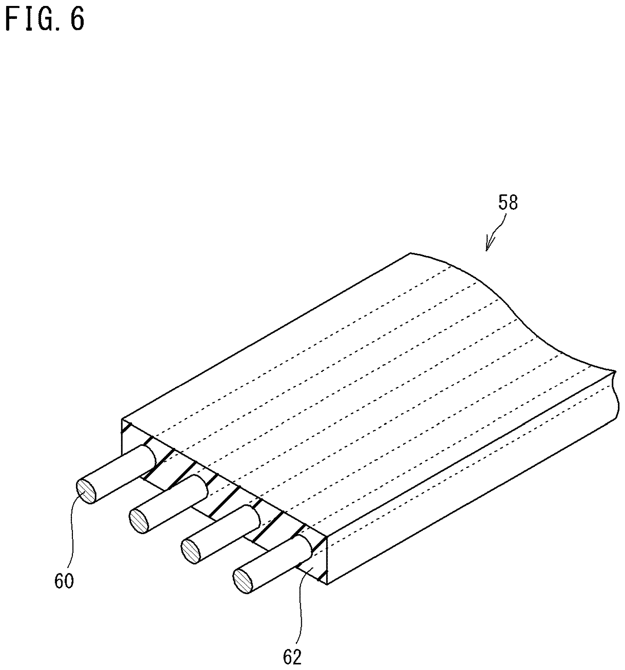

For forming the band 18, a band strip 58 shown in FIG. 6 is used. The band strip 58 includes a plurality of band cords 60 aligned with each other. These band cords 60 are covered with a topping rubber 62. The band strip 58 is a cord array in which the plurality of band cords 60 are arranged. The band strip 58 has a belt shape. The band cords 60 included in the band strip 58 extend in the length direction of the band strip 58.

The band strip 58 shown in FIG. 6 includes four band cords 60. The number of band cords 60 included in the band strip 58 is not limited to 4. The number of band cords 60 included in the band strip 58 is determined as appropriate in a range of not less than 2 and not greater than 15 in consideration of the specifications of the tire 2, etc.

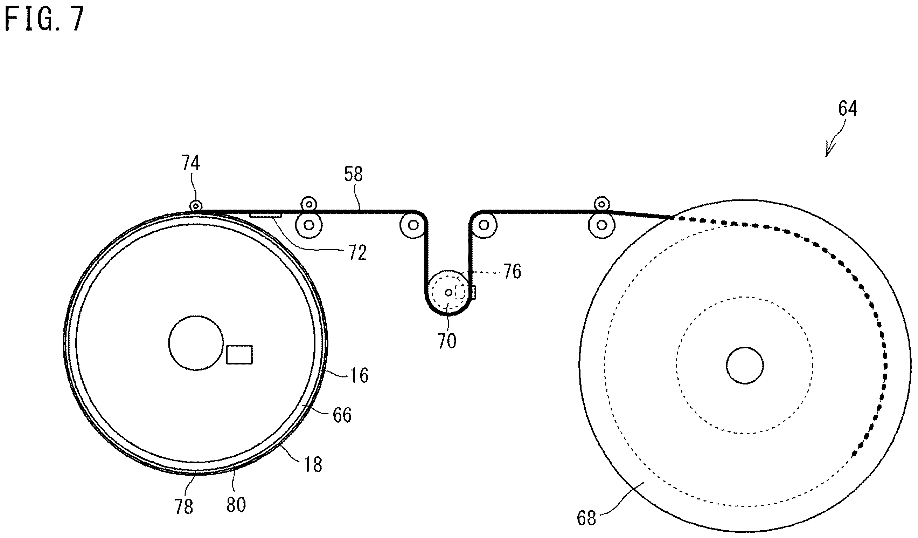

FIG. 7 shows an example of a forming machine 64. The forming machine 64 is a general forming machine for forming the band 18. The detailed description of the forming machine 64 is omitted. The forming machine 64 includes a drum 66, a reel 68, a feed roller 70, a guide 72, and a winding roller 74.

The reel 68 on which the band strip 58 is wound is set in the forming machine 64. The belt 16 is formed on the drum 66, and then the band strip 58 wound on the reel 68 is fed to the drum 66.

The feed roller 70 feeds the band strip 58 wound on the reel 68, toward the drum 66. The guide 72 guides the band strip 58 to a winding position. The winding roller 74 presses the band strip 58 onto the drum 66. The forming machine 64 can helically wind the band strip 58 onto the drum 66 by rotating the drum 66 and moving the winding position in the axial direction.

The forming machine 64 winds the band strip 58 onto the drum 66 while applying a load to the band strip 58. In other words, the forming machine 64 winds the band strip 58 onto the drum 66 while pulling the band strip 58 at a predetermined tension.

The forming machine 64 includes a tension controller 76. The tension controller 76 adjusts the load applied to the band strip 58. Accordingly, the tension generated in the band strip 58 is controlled.

The configuration of the tension controller 76 is not particularly limited as long as the load applied to the band strip 58 can be controlled. In the forming machine 64, the tension controller 76 controls the load, that is, the tension, applied to the band strip 58 by adjusting the rotation speed of the drum 66 and the rotation speed of the feed roller 70.

In the present invention, the load being applied to the band strip 58 is measured at the tension controller 76. The load applied per band cord is obtained from the measurement value of this load. In the present invention, the load applied to the band cords is represented as the load applied per band cord.

In the forming machine 64, the band strip 58 is wound onto a body 78 of the drum 66. The outer circumferential surface of the body 78 is a forming surface 80. In the forming machine 64, a contour line of the forming surface 80 is represented by a straight line in a cross-section along a plane including the rotation axis of the drum 66. The forming surface 80 has a flat profile in the axial direction.

Although not described in detail, in addition to the band 18, the belt 16 and the tread 4 are formed on the drum 66 of the forming machine 64. In the preparation step, a tread ring (not shown) is prepared by combining components such as the belt 16, the band 18, and the tread 4 on the drum 66. The preparation step includes a tread ring formation step.

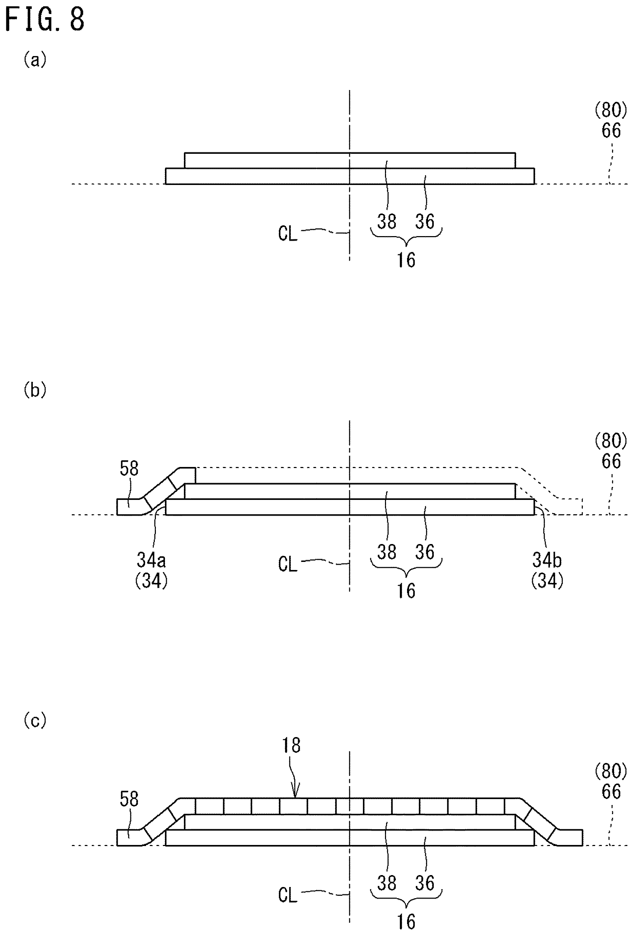

In the tread ring formation step, the belt 16 is formed. In the formation of the belt 16, an inner sheet is prepared as a preform of the inner layer 36 which is a component of the belt 16, and an outer sheet is prepared as a preform of the outer layer 38 which is a component of the belt 16. The inner sheet and the outer sheet are sequentially wound onto the forming surface 80 of the drum 66 and are processed into a ring shape. Accordingly, the belt 16 composed of the inner layer 36 and the outer layer 38 is formed as shown in part a of FIG. 8.

After the belt 16 is formed, the band 18 is formed. In the formation of the band 18, the band strip 58 is fed to the drum 66. The forming machine 64 rotates the drum 66 and moves the winding position of the band strip 58 from the first end 34a side toward the second end 34b side of the belt 16. Accordingly, the band strip 58 is wound helically from the first end 34a side toward the second end 34b side of the belt 16 as shown in part b of the FIG. 8. The band 18 is formed on the belt 16 as shown in part c of FIG. 8.

The band 18 shown in FIG. 8 is formed by helically winding one band strip 58. The band 18 may be formed using two band strips 58. In this case, the band 18 is formed by helically winding each band strip 58 from the equator plane CL toward an end 34 of the belt 16, or by helically winding each band strip 58 from an end 34 of the belt 16 toward the equator plane CL.

As described above, in the band 18 of the tire 2, the band cords 60 extend substantially in the circumferential direction. The band strip 58 which forms the band 18 in the tire 2 also extends substantially in the circumferential direction. An angle of the band strip 58 with respect to the circumferential direction is not greater than 5° and preferably not greater than 2°.

After the band 18 is formed, the tread 4 is formed. Although not shown, in the formation of the tread 4, a tread sheet which is a preform of the tread 4 is prepared. The tread sheet is wound onto the band 18 formed on the forming surface 80 of the drum 66, and is processed into a ring shape. Accordingly, the tread 4 is formed. The tread 4 may be formed by preparing a tread strip processed into a belt shape as a preform of the tread 4, and winding the tread strip.

Although not described in detail, in the production of the tire 2, a green tire base (not shown) is prepared by combining components such as the inner liner 14, the carcass 12, and the beads 10 on another forming machine (not shown). A green tire is obtained by combining the green tire base with the above-described tread ring. A green tire may be prepared by sequentially forming the belt 16, the band 18, and the tread 4 on the green tire base.

In the production of the tire 2, the green tire prepared in the preparation step is placed into a mold (not shown). The green tire is pressurized and heated in the mold. Accordingly, the green tire is vulcanized to obtain the tire 2 shown in FIG. 1. The production method for the tire 2 includes a step of vulcanizing the green tire. In the production of the tire 2, the vulcanization step is performed in the same manner as a conventional vulcanization process, and thus the description thereof is omitted.

As described above, the band 18 is formed by helically winding the band strip 58. The forming machine 64 can change the load applied to the band strip 58 in the middle of the formation of the band 18. The band 18 can be provided with a plurality of zones in which the load applied to the band strip 58 is different.

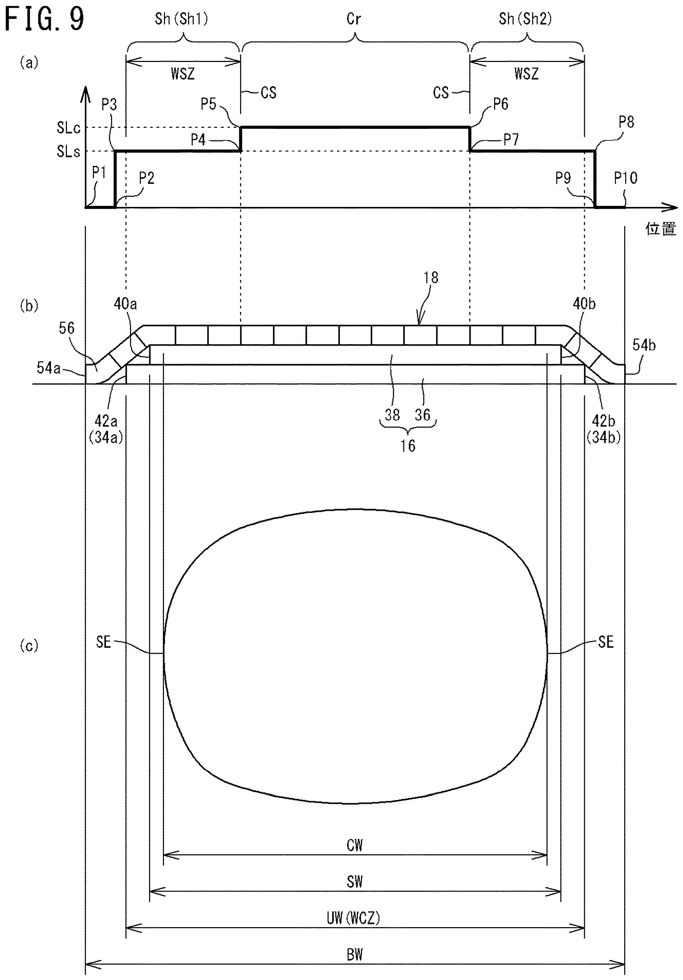

The following will describe a profile of the load applied to the band strip 58 during the formation of the band 18, in other words, tension control of the band cords 60, with reference to FIG. 9.

Part a of FIG. 9 is a graph conceptually showing the relationship between the load applied to the band strip 58 and the position of each part of the band 18. The vertical axis represents the magnitude of the load, and the horizontal axis represents the distance from a first end 54a of the band 18. Part b of FIG. 9 is a schematic configuration diagram showing the band 18, to which a load profile shown in part a of FIG. 9 is applied, together with the belt 16. Part c of FIG. 9 shows the contour of the reference ground-contact surface of the tire 2.

In FIG. 9, the right-left direction corresponds to the axial direction of the tire 2. In FIG. 9, a length in the right-left direction in part a, a length in the right-left direction in part b, and a length in the right-left direction in part c are represented on the same scale.

In FIG. 9, a double-headed arrow CW represents the width of the reference ground-contact surface. The width CW is represented as the distance in the axial direction from a first ground-contact end SE to a second ground-contact end SE. The width CW is equal to twice the above-described distance A100 in the axial direction (see FIG. 4). The width CW is specified in an image of the reference ground-contact surface. The width CW is equal to the distance in the axial direction, from one reference ground-contact position GE to the other reference ground-contact position GE, measured along the tread surface 20.

In FIG. 9, a double-headed arrow SW represents the width of the outer layer 38. The width SW of the outer layer 38 is represented as the distance in the axial direction, from a first end 40a to a second end 40b of the outer layer 38, measured along the outer surface of the outer layer 38. A double-headed arrow UW represents the width of the inner layer 36. The width UW of the inner layer 36 is represented as the distance in the axial direction, from a first end 42a to a second end 42b of the inner layer 36, measured along the outer surface of the inner layer 36. A double-headed arrow BW represents the width of the band 18. The width BW of the band 18 is represented as the distance in the axial direction, from the first end 54a to a second end 54b of the band 18, measured along the forming surface 80 of the drum 66.

The width SW of the outer layer 38, the width UW of the inner layer 36, and the width BW of the band 18 respectively represent the width of the outer layer 38, the width of the inner layer 36, and the width of the band 18 formed on the drum 66 of the forming machine 64. The width SW of the outer layer 38, the width UW of the inner layer 36, and the width BW of the band 18 may be specified in the tire 2. In this case, the width SW of the outer layer 38 is represented as the length of an axial component of the outer belt cord 50, the width UW of the inner layer 36 is represented as the length of the axial component of the inner belt cord 48, and the width BW of the band 18 is measured along the outer surface of the carcass 12.

The following will describe the profile of the load applied to the band strip 58, with the case of helically winding the band strip 58 from the first end 54a toward the second end 54b of the band 18, as an example. The tension of the band cords 60 is controlled on the basis of the load profile.

In FIG. 9, reference signs P1 to P10 represent positions on the profile. These positions are represented by the winding position of the band strip 58 and the load at that position.

In FIG. 9, a zone from the first end 34a to the second end 34b of the belt 16 is the above-described control zone. The width UW of the inner layer 36 shown in FIG. 9 is equal to the width WCZ in the axial direction of the control zone.

In FIG. 9, a zone indicated by reference sign Cr is the above-described crown zone, and each zone indicated by reference sign Sh is the above-described shoulder zone. The shoulder zone Sh on the first end 34a side of the belt 16 is also referred to as first shoulder zone Sh1, and the shoulder zone Sh on the second end 34b side of the belt 16 is also referred to as second shoulder zone Sh2.

The distance in the axial direction from each end 34 of the belt 16 to each boundary CS in FIG. 9 is equal to the above-described width WSZ in the axial direction of the shoulder zone.

The position P1 corresponds to the first end 54a of the band 18, and the position P10 corresponds to the second end 54b of the band 18.

A first zone from the position P1 to the position P2 corresponds to the position of the start of winding of the band strip 58. In the first zone, no load is applied to the band strip 58. When the winding is started, a load SL is applied to the band strip 58. In a second zone from the position P2 to the position P3, the load SL applied to the band strip 58 is increased to a load SLs. In a third zone from the position P3 to the position P4, the load SL is maintained at the load SLs. In the third zone, the winding position passes through the first end 42a of the inner layer 36. Accordingly, the winding position enters the first shoulder zone Sh1. The positions P4 and P5 correspond to the boundary CS between the first shoulder zone Sh1 and the crown zone Cr.

When the winding position reaches the boundary CS, the load SL applied to the band strip 58 is increased. In a fourth zone from the position P4 to the position P5, the load SL is increased from the load SLs to a load SLc. In a fifth zone from the position P5 to the position P6, that is, in the crown zone Cr, the load SL is maintained at the load SLc.

The positions P6 and P7 correspond to the boundary CS between the crown zone Cr and the second shoulder zone Sh2. When the winding position reaches the boundary CS, the load SL applied to the band strip 58 is decreased. In a sixth zone from the position P6 to the position P7, the load SL is decreased from the load SLc to the load SLs. The winding position enters the second shoulder zone Sh2. In a seventh zone from the position P7 to the position P8, the load SL is maintained at the load SLs. In the seventh zone, the winding position passes through the second end 42b of the inner layer 36. Accordingly, the winding position exits the second shoulder zone Sh2. In an eighth zone from the position P8 to the position P9, the load SL is decreased. When the winding position reaches the position P10, the winding is ended. A ninth zone from the position P9 to the position P 10 corresponds to the position of the end of winding of the band strip 58.

In the green tire preparation step, the band 18 is formed by helically winding the belt-shaped band strip 58 onto the belt 16 while applying the load SL to the band strip 58. The band 18 of the tire 2 is composed of the helically wound band strip 58.

As described above, the load SL applied to the band strip 58 is controlled in the control zone. The band strip 58 includes the band cords 60. Tension T generated in the band cords 60 is controlled by controlling the load SL applied to the band strip 58. Accordingly, residual tension RT of the band cords 60 is controlled at the band 18 of the tire 2.

As described above, the belt 16 of the tire 2 includes the large number of belt cords 44 aligned with each other, and each belt cord 44 is tilted relative to the equator plane CL.

In a running tire, a ground-contact state and a non-ground-contact state are repeated. When a tread comes into contact with a road surface, a belt is bent, and when the tread becomes separated from the road surface, the belt becomes restored.

As described above, the tilt angle of each belt cord 44 of the tire 2 is not less than 19 degrees and not greater than 30 degrees. When the tilt angle is less than 45 degrees as in the tire 2, the tilt angle of the belt cord tends to increase when the belt is bent, and tends to decrease when the belt becomes restored.

As a result of conducting intensive studies focusing on the movement of the belt, the present inventors have found that a tire having a larger change in the tilt angle tends to have higher rolling resistance, that the degree of change in the tilt angle depends on the holding force of a band, and that the change in the tilt angle can be suppressed if the tension of a band cord which has been conventionally adjusted by applying a load of less than 15.0 N is increased, so that there is a possibility that reduction of rolling resistance can be achieved.

In the production of the tire 2, a load DL applied to the band cords 60 is set to a load higher than a conventional one. Specifically, the load DL applied to the band cords 60 in the control zone is not less than 15.0 N. Therefore, the residual tension RT of the band cords 60 in the control zone of the tire 2 is higher than that of a conventional tire. Specifically, the residual tension RT of the band cords 60 in the control zone is not less than 15.0 N.

In the tire 2, the band cords 60 have residual tension RT higher than that of a conventional tire. The force with which the band 18 tightens the belt 16 is stronger than that of a conventional band. In other words, the force with which the band 18 holds the belt 16 is stronger than that of the conventional band.

The band 18 of the tire 2 can effectively hold the belt 16. The band 18 can effectively hold the belt 16, especially at a crown portion.

The tire 2 can reduce the change in the tilt angle of each belt cord 44 to a small level. Since deformation of the belt 16 is suppressed, deformation of the topping rubber 46 of the belt 16 is suppressed. The band 18 can contribute to suppressing an increase in rolling resistance due to the movement of the belt 16. The tire 2 can suppress an increase in rolling resistance due to the movement of the belt 16.

The present inventors have studied in detail the influence of the residual tension of a band cord on the profile of a tread surface when the interior of a tire is filled with air to inflate the tire. As a result, the present inventors have also found that, when the residual tension RT of the band cords 60 in the control zone is not less than 15.0 N, if residual tension RTs of the band cords 60 in each shoulder zone Sh is set to be higher than residual tension RTc of the band cords 60 in the crown zone Cr, the profile of the tread surface at inflation tends to be rounded.

In a tire in which the profile of a tread surface is rounded at inflation, when each shoulder portion comes into contact with a road surface, the tread surface tends to become deformed so as to warp in the opposite direction. If such deformation occurs, compressive strain is generated in each shoulder portion. As described above, in the running tire, a ground-contact state and a non-ground-contact state are repeated. Therefore, compressive strain is generated each time the tread comes into contact with the ground. The compressive strain increases rolling resistance. In this case, the above-described effect of the band 18 is canceled out.

In the case of the tire 2, however, in the formation of the band 18 in the preparation step, the load SLc applied to the band strip 58 in the crown zone Cr is higher than the load SLs applied to the band strip 58 in each shoulder zone Sh. In other words, a load DLc applied to the band cords 60 in the crown zone Cr is higher than a load DLs applied to the band cords 60 in each shoulder zone Sh. Therefore, in the band 18 of the tire 2, the residual tension RTc of the band cords 60 in the crown zone Cr is higher than the residual tension RTs of the band cords 60 in each shoulder zone Sh.

In the tire 2, the profile of the tread surface 20 is inhibited from being rounded at inflation. The tire 2 can suppress generation of compressive strain in each shoulder portion. In the tire 2, an increase in rolling resistance due to compressive strain is suppressed.

In the tire 2, the band 18 can sufficiently exhibit its function without cancelling out the effect of the band 18.

The rolling resistance of the tire 2 is lower than that of a conventional tire. The tire 2 can have reduced rolling resistance.

In the tire 2, for reducing rolling resistance, it is not necessary to take low heat generation properties into consideration for the crosslinked rubber that forms the cap portion 24. In the tire 2, the cap portion 24 can be formed from a crosslinked rubber for which importance is placed on wet properties.

Furthermore, in the tire 2, the shape index F of the reference ground-contact surface is not less than 1.00 and not greater than 1.30. Accordingly, progress of wear at each shoulder portion or the crown portion, in other words, progress of uneven wear, is suppressed. The tire 2 has good uneven wear resistance. The band 18 of the tire 2 can stably exhibit its function. As described above, the rolling resistance of the tire 2 is lower than that of a conventional tire. The tire 2 can contribute to improving the fuel economy of a vehicle.

The tire 2 can achieve reduction of rolling resistance without decreasing wet performance.

As described above, in the tire 2, the shape index F of the reference ground-contact surface is not less than 1.00 and not greater than 1.30.

Since the shape index F is not less than 1.00, the tire 2 can suppress progress of wear at each shoulder portion. From this viewpoint, the shape index F is preferably not less than 1.08 and more preferably not less than 1.09.

Since the shape index F is not greater than 1.30, the tire 2 can inhibit a ground-contact length at the equator plane CL, in other words, the equator ground-contact length, from becoming longer. The tire 2 can suppress progress of wear at the crown portion. From this viewpoint, the shape index F is preferably not greater than 1.20 and more preferably not greater than 1.13.

As described above, in the tire 2, the residual tension RTc of the band cords 60 in the crown zone Cr is higher than the residual tension RTs of the band cords 60 in each shoulder zone Sh. From the viewpoint of being able to effectively suppress generation of compressive strain in each shoulder portion and being able to effectively reduce the rolling resistance of the tire 2, the ratio (RTs/RTc) of the residual tension RTs of the band cords 60 in each shoulder zone Sh to the residual tension RTc of the band cords 60 in the crown zone Cr is preferably not greater than 0.92 and more preferably not greater than 0.80. From the same viewpoint, the ratio (DLs/DLc) of the load DLs applied to the band cords 60 in each shoulder zone Sh to the load DLc applied to the band cords 60 in the crown zone Cr is preferably not greater than 0.92 and more preferably not greater than 0.80.

From the viewpoint of being able to reduce a change in the tilt angle of each belt cord 44 to a small level, the ratio (RTs/RTc) is preferably not less than 0.50, more preferably not less than 0.60, and further preferably not less than 0.70. From the same viewpoint, the ratio (DLs/DLc) is preferably not less than 0.50, more preferably not less than 0.60, and further preferably not less than 0.70.

The residual tension RTc of the band cords 60 in the crown zone Cr of the tire 2 is preferably not greater than 50.0 N.

If the residual tension RTc of the band cords 60 in the crown zone Cr is high, there is a possibility that the band cords 60 are close to the outer belt cords 50 and a sufficient rubber amount cannot be ensured therebetween. In this case, damage is likely to occur between the band 18 and the belt 16, resulting in a decrease in the durability of the tire 2. If the topping rubber 62 which covers the band cords 60 is thickened in order to suppress a decrease in durability, rolling resistance increases.

However, when the residual tension RTc of the band cords 60 in the crown zone Cr is set to be not greater than 50.0 N, a sufficient rubber amount can be ensured between the band cords 60 and the outer belt cords 50. Occurrence of damage due to the band cords 60 and the outer belt cords 50 being close to each other is suppressed. The tire 2 can maintain good durability. The band 18 can stably exhibit its function. As described above, the rolling resistance of the tire 2 is lower than that of a conventional tire. The tire 2 can contribute to improving the fuel economy of a vehicle. From this viewpoint, the residual tension RTc of the band cords 60 in the crown zone Cr is more preferably not greater than 45.0 N and further preferably not greater than 43.5 N. From the same viewpoint, the load DLc applied to the band cords 60 in the crown zone Cr is preferably not greater than 50.0 N, more preferably not greater than 45.0 N, and further preferably not greater than 43.5 N.

As described above, each band cord 60 is an organic fiber cord. An elongation rate under constant load of each band cord 60, obtained in accordance with JIS L1017, is preferably not less than 1.9% and not greater than 8.4%.

When the elongation rate under constant load of each band cord 60 is set to be not less than 1.9%, the band 18 including the band cords 60 can effectively hold the belt 16. Since deformation of the belt 16 is suppressed, deformation of the topping rubber 46 of the belt 16 is suppressed. The band 18 can contribute to suppressing an increase in rolling resistance due to the movement of the belt 16. The tire 2 can suppress an increase in rolling resistance due to the movement of the belt 16. From this viewpoint, the elongation rate under constant load of each band cord 60 is more preferably not less than 2.5%.

When the elongation rate under constant load of each band cord 60 is set to be not greater than 8.4%, elongation caused by applying a load to the band cords 60 is appropriately suppressed. The load applied to the band cords 60 is effectively reflected in the tension. In this case as well, the band 18 can effectively hold the belt 16. Since deformation of the belt 16 is suppressed, deformation of the topping rubber 46 of the belt 16 is suppressed. The band 18 can contribute to suppressing an increase in rolling resistance due to the movement of the belt 16. The tire 2 can suppress an increase in rolling resistance due to the movement of the belt 16. From this viewpoint, the elongation rate under constant load of each band cord 60 is more preferably not greater than 4.0%.

As described above, the control zone is composed of the crown zone Cr and the pair of shoulder zones Sh. The width WSZ in the axial direction of each shoulder zone Sh is preferably not less than 1/8 and not greater than 3/8 of the width WCZ in the axial direction of the control zone. In other words, the ratio (WSZ/WCZ) of the width WSZ in the axial direction to the width WCZ in the axial direction is preferably not less than 1/8 and not greater than 3/8.

When the ratio (WSZ/WCZ) is set to be not less than 1/8, the profile of the tread surface 20 is inhibited from being rounded when the tire 2 is inflated. The tire 2 can suppress generation of compressive strain in each shoulder portion. In the tire 2, an increase in rolling resistance due to compressive strain is suppressed. In the tire 2, the band 18 can sufficiently exhibit its function without cancelling out the effect of the band 18. From this viewpoint, the ratio (WSZ/WCZ) is more preferably not less than 1/6.

When the ratio (WSZ/WCZ) is set to be not greater than 3/8, the band 18 of the tire 2 can effectively hold the belt 16. The band 18 can effectively hold the belt 16, especially at the crown portion. The tire 2 can reduce a change in the tilt angle of each belt cord 44 to a small level. Since deformation of the belt 16 is suppressed, deformation of the topping rubber 46 of the belt 16 is suppressed. The band 18 can contribute to suppressing an increase in rolling resistance due to the movement of the belt 16. The tire 2 can suppress an increase in rolling resistance due to the movement of the belt 16. From this viewpoint, the ratio (WSZ/WCZ) is more preferably not greater than 1/3.

As described above, in the green tire preparation step, the band 18 is formed by helically winding the belt-shaped band strip 58 onto the belt 16 while applying the load SL to the band strip 58. **In** the formation of the band 18, the band strip 58 is helically wound with no gaps. **In** the preparation step, the band 18 may be formed by helically winding the band strip 58 with a gap. The band 18 thus obtained can contribute to reducing the weight of the tire 2. **In** this case, the tire 2 can have further reduced rolling resistance. From this viewpoint, the band 18 is preferably formed by helically winding the band strip 58 with a gap. From the viewpoint of obtaining the band 18 that can effectively hold the belt 16 and can contribute to weight reduction, this gap is preferably not less than 3 mm and not greater than 5 mm.

As described above, in the meridian cross-section of the tire 2, the contour line of the tread surface 20 includes a plurality of arcs aligned in the axial direction.

The contour line of the tread surface 20 shown in FIG. 3 includes a first arc, a pair of second arcs, a pair of third arcs, and a pair of shoulder arcs.

In FIG. 3, the position indicated by reference sign PCS is the above-described position, on the tread surface 20, corresponding to the boundary CS between the crown zone Cr and the shoulder zone Sh, that is, the boundary corresponding position.

As shown in FIG. 3, the boundary corresponding position PCS is located axially outward of the boundary CM between the first arc and the second arc. Accordingly, the band 18 which is formed such that the residual tension RTc of the band cords 60 in the crown zone Cr is higher than the residual tension RTs of the band cords 60 in each shoulder zone Sh, can effectively hold the belt 16. The band 18 can effectively hold the belt 16, especially at the crown portion. The tire 2 can reduce a change in the tilt angle of each belt cord 44 to a small level. Since deformation of the belt 16 is suppressed, deformation of the topping rubber 46 of the belt 16 is suppressed. The band 18 can contribute to suppressing an increase in rolling resistance due to the movement of the belt 16. The tire 2 can suppress an increase in rolling resistance due to the movement of the belt 16. From this viewpoint, the boundary corresponding position PCS is preferably located axially outward of the boundary CM between the first arc and the second arc.

The boundary corresponding position PCS is located axially inward of the boundary MS between the second arc and the third arc. Accordingly, the profile of the tread surface 20 is inhibited from being rounded when the tire 2 is inflated. The tire 2 can suppress generation of compressive strain in each shoulder portion. In the tire 2, an increase in rolling resistance due to compressive strain is suppressed. In the tire 2, the band 18 can sufficiently exhibit its function without cancelling out the effect of the band 18. From this viewpoint, the boundary corresponding position PCS is preferably located axially inward of the boundary MS between the second arc and the third arc.

From the viewpoint of being able to effectively reduce the rolling resistance of the tire 2, more preferably, the boundary corresponding position PCS is located between the boundary CM between the first arc and the second arc and the boundary MS between the second arc and the third arc in the axial direction, in other words, is included in the second arc.

On the tread surface 20, the boundary SS between the third arc and the shoulder arc is a location where the change in the curvature of the contour line is large.

As shown in FIG. 3, the reference ground-contact position GE is located axially inward of the boundary SS. On the tread surface 20 of the tire 2, the boundary SS where the change in the curvature of the contour line of the tread surface 20 is large is not included in the reference ground-contact surface. The tire 2 can effectively suppress generation of compressive strain in each shoulder portion. In the tire 2, the band 18 can sufficiently exhibit its function without cancelling out the effect of the band 18. From this viewpoint, the reference ground-contact position GE is preferably located axially inward of the boundary SS between the third arc and the shoulder arc.

In the tire 2, the ratio (Rm/Rs) of the radius Rm of each second arc to the radius Rs of each third arc is preferably not less than 2.1 and not greater than 2.7.

When the ratio (Rm/Rs) is set to be not less than 2.1, generation of compressive strain is effectively suppressed. The tire 2 can have further reduced rolling resistance. From this viewpoint, the ratio (Rm/Rs) is more preferably not less than 2.3.

When the ratio (Rm/Rs) is set to be not greater than 2.7, slipping of the tread surface 20 on a road surface is suppressed, and the tread 4 at each shoulder portion is formed with an appropriate thickness. In the tire 2, good uneven wear resistance is maintained. From this viewpoint, the ratio (Rm/Rs) is more preferably not greater than 2.5.

In the tire 2, the ratio (Rc/Rm) of the radius Rc of the first arc to the radius Rm of each second arc is preferably not less than 4.0 and not greater than 5.5.

When the ratio (Rc/Rm) is set to be not less than 4.0, generation of compressive strain is effectively suppressed. The tire 2 can have further reduced rolling resistance. From this viewpoint, the ratio (Rc/Rm) is more preferably not less than 4.2.

When the ratio (Rc/Rm) is set to be not greater than 5.5, slipping of the tread surface 20 on a road surface is suppressed, and the tread 4 at each shoulder portion is formed with an appropriate thickness. In the tire 2, good uneven wear resistance is maintained. From this viewpoint, the ratio (Rc/Rm) is more preferably not greater than 5.3.

In the tire 2, the ratio (Rs/Rh) of the radius Rs of each third arc to a radius Rh of each shoulder arc is preferably not less than 10 and not greater than 20.

When the ratio (Rs/Rh) is set to be not less than 10, generation of compressive strain is effectively suppressed. The tire 2 can have further reduced rolling resistance. From this viewpoint, the ratio (Rs/Rh) is more preferably not less than 13.

When the ratio (Rs/Rh) is set to be not greater than 20, slipping of the tread surface 20 on a road surface is suppressed, and the tread 4 at each shoulder portion is formed with an appropriate thickness. In the tire 2, good uneven wear resistance is maintained. From this viewpoint, the ratio (Rs/Rh) is more preferably not greater than 17.

As described above, in the present invention, a tire that can achieve reduction of rolling resistance without decreasing wet performance, is obtained.

### EXAMPLES

The following will describe the present invention in further detail by means of examples, etc., but the present invention is not limited to these examples.

### [Example 1]

A pneumatic tire for a passenger car (tire designation = 205/55R16 91V) having the basic structure shown in FIG. 1 and having specifications shown in Table 1 below was obtained.

The width WSZ in the axial direction of each shoulder zone was set to 1/4 of the width WCZ in the axial direction of the control zone. A cord formed from a nylon fiber was used as each band cord. The elongation rate under constant load of the band cord was 1.3%.

The residual tension RTc of the band cords in the crown zone, the residual tension RTs of the band cords in each shoulder zone, the ratio (RTs/RTc), and the shape index F were as shown in Table 1 below.

### [Examples 2 to 8 and Comparative Examples 1 to 5]

Tires of Examples 2 to 8 and Comparative Examples 1 to 5 were obtained in the same manner as Example 1, except that the residual tension RTc, the residual tension RTs, the ratio (RTs/RTc), and the shape index F were set as shown in Tables 1 and 2 below.

### [Rolling Resistance]

Using a rolling resistance testing machine, a rolling resistance coefficient (RRC) was measured when a test tire ran on a drum at a speed of 80 km/h under the following conditions. The results are shown as indexes in the cells for "RRC" in Tables 1 and 2 below with the result of Comparative Example 1 being regarded as 100. The higher the value is, the lower the rolling resistance of the tire is.
Rim: 16×6.5J
Internal pressure: 210 kPa
Vertical load: 4.82 kN

### [Wet Performance]

Test tires were fitted onto rims (size = 16×6.5J) and inflated with air to adjust the internal pressures of the tires to 250 kPa. The tires were mounted to a test vehicle (passenger car). The test vehicle was driven on a test course with a wet road surface (water film thickness = 1.4 mm), and lap times were measured. The results are shown as indexes in the cells for "WET" in Tables 1 and 2 below with the result of Comparative Example 1 being regarded as 100. The higher the value is, the better the WET performance is.

### [Durability]

A test tire was fitted onto a rim (size = 16×6.5J) and inflated with air to adjust the internal pressure thereof to 250 kPa. The tire was mounted to a drum type tire testing machine. A vertical load of 7.33 kN was applied to the tire, and the tire was caused to run on a drum (radius = 1.7 m) at a speed of 100 km/h. The degree of occurrence of damage (BEL) to the tire was checked at the time of running 20000 km. The results are shown in the cells for "durability" in Tables 1 and 2 below with the case where no damage occurred as "A", with the case where damage occurred but at an acceptable level as "B", and with the case where unacceptable damage occurred as "C".

### [Wear Resistance]

A test tire was fitted onto a rim (size = 16×7J) and inflated with air to adjust the internal pressure thereof to 250 kPa. The tire was mounted to a wear energy measuring device. A camber angle was set to 0°, a slip angle was set to 0°, the wear energy of the tire was measured, and the ease of progress of wear was evaluated. The results are shown in the cells for "wear resistance" in Tables 1 and 2 below with the case where progress of wear is expected to be small and suppressed as "A", with the case where wear is expected to progress but at an acceptable level as "B, and with the case where wear is expected to progress to an unacceptable degree as "C".

**[Table 1]**

| | Comp. Ex. 1 | Ex. 1 | Comp. Ex. 2 | Comp. Ex. 3 | Ex. 2 | Ex. 3 | Ex. 4 |
|---|---|---|---|---|---|---|---|
| RTc [N] | 148 | 435 | 435 | 450 | 300 | 600 | 500 |
| RTs [N] | 104 | 305 | 105 | 180 | 150 | 300 | 300 |
| RTs/RTc [-] | 0.70 | 0.70 | 0.24 | 0.40 | 0.50 | 0.50 | 0.60 |
| F | 1.13 | 1.13 | 0.90 | 0.95 | 1.10 | 1.08 | 1.10 |
| RRC | 100 | 104 | 100 | 101 | 101 | 105 | 101 |
| WET | 100 | 100 | 100 | 100 | 100 | 100 | 100 |
| Durability | A | A | A | A | A | B | A |
| Wear resistance | A | A | C | C | A | A | A |

**[Table 2]**

| | Ex. 5 | Ex. 6 | Ex. 7 | Ex. 8 | Comp. Ex. 4 | Comp. Ex. 5 |
|---|---|---|---|---|---|---|
| RTc [N] | 300 | 320 | 435 | 435 | 200 | 200 |
| RTs [N] | 215 | 230 | 350 | 400 | 200 | 250 |
| RTs/RTc [-] | 0.72 | 0.72 | 0.80 | 0.92 | 1.00 | 1.25 |
| F | 1.09 | 1.09 | 1.13 | 1.35 | 1.25 | 1.50 |
| RRC | 102 | 103 | 103 | 102 | 100 | 99 |
| WET | 100 | 100 | 100 | 100 | 100 | 100 |
| Durability | A | A | A | A | A | A |
| Wear resistance | A | A | A | B | A | C |

As shown in Tables 1 and 2, it is confirmed that, in each Example, reduction of rolling resistance is achieved without decreasing wet performance. From the evaluation results, advantages of the present invention are clear.

### INDUSTRIAL APPLICABILITY

The above-described technology capable of achieving reduction of rolling resistance without decreasing wet performance can also be applied to various tires.

### REFERENCE SIGNS LIST

- 2: tire
- 4: tread
- 16: belt
- 18: band
- 20: tread surface
- 34, 34a, 34b: end of belt 16
- 36: inner layer
- 38: outer layer
- 44: belt cord
- 46: topping rubber
- 48: inner belt cord
- 50: outer belt cord
- 56: side surface
- 58: band strip
- 60: band cord
- 62: topping rubber
- 64: forming machine
- 66: drum
- 68: reel
- 76: tension controller
- 78: body
- 80: forming surface

## Claims

1. A tire (2) comprising:
a tread (4) configured to come into contact with a road surface;
a belt (16) located radially inward of the tread (4); and
a band (18) located between the tread and the belt in a radial direction and stacked on the belt (16), wherein
the belt (16) includes a large number of belt cords (44) aligned with each other,
each of the belt cords (44) is tilted relative to a circumferential direction,
the band (18) includes a band cord (60) extending substantially in the circumferential direction,
the band cord (60) is an organic fiber cord,
the band (18) is composed of a band strip (58),
the band strip (58) is a cord array in which a plurality of the band cords (60) are arranged,
a zone from a first end (64a) to a second end (34b) of the belt (16) is a control zone in which tension of the band cords (60) is controlled,
residual tension of the band cords (60) in the control zone is not less than 15.0 N,
the control zone includes a crown zone (Cr) and a pair of shoulder zones (Sh1, Sh2) located axially outward of the crown zone (Cr),
residual tension of the band cords (60) in the crown zone (Cr) is higher than residual tension of the band cords in each shoulder zone (Sh1, Sh2),
**characterized in that**
the band (18) is composed of a helically wound band strip (58), and
a ratio of an equator ground-contact length measured along an equator plane (CL) of the tire (2) on a reference ground-contact surface obtained by bringing the tire into contact with a flat road surface with a vertical load, which is 70% of a normal load of the tire, being applied to the tire in a state where the tire is fitted on a normal rim, an internal pressure of the tire is adjusted to a normal internal pressure, and a camber angle of the tire is set to 0°, to a reference ground-contact length at a position corresponding to a width which is 80% of a maximum ground-contact width, is defined as a shape index (F), and
the shape index is not less than 1.00 and not greater than 1.30.

2. The tire (2) according to claim 1, wherein a ratio of the residual tension of the band cords (60) in each shoulder zone (Sh1, Sh2) to the residual tension of the band cords (60) in the crown zone (Cr) is not less than 0.50.

3. The tire (2) according to claim 1 or 2, wherein the residual tension of the band cords (60) in the crown zone (Cr) is not greater than 50 N.

4. The tire (2) according to any one of claims 1 to 3, wherein an elongation rate under constant load of the band cord (60), obtained in accordance with JIS L 1017, is not less than 1.9% and not greater than 8.4%.

5. The tire (2) according to any one of claims 1 to 4, wherein a width in an axial direction of each shoulder zone (Sh1, Sh2) is not less than 1/8 and not greater than 3/8 of a width in the axial direction of the control zone (Cr).

6. The tire (2) according to any one of claims 1 to 5, wherein
the tread (4) includes a tread surface (20) which comes into contact with the road surface,
in a meridian cross-section of the tire (2), a contour line of the tread surface (20) includes a plurality of arcs aligned in the axial direction,
the plurality of arcs include a first arc located at the center in the axial direction, a pair of second arcs located axially outward of the first arc, and a pair of third arcs located axially outward of the second arcs,
a position, on the tread surface (20) , corresponding to the boundary (CS) between the crown zone (Cr) and the shoulder zone (Sh1, Sh2) is a boundary (CS) corresponding position, and
the boundary corresponding position is located axially outward of a boundary (CM) between the first arc and the second arc.

7. The tire (2) according to claim 6, wherein
the boundary corresponding position is located axially inward of the boundary (MS) between the second arc and the third arc.

8. The tire (2) according to claim 6 or 7, wherein
the plurality of arcs include a pair of shoulder arcs located located axially outward of the third arcs,
each shoulder arc has a smallest radius among the plurality of arcs included in the contour line of the tread surface,
a position, on the tread surface, corresponding to the ground-contact end of the reference ground-contact surface is a reference ground-contact position, and
the reference ground-contact position is located axially inward of the boundary (SS) between the third arc and the shoulder arc.

9. A method for producing a tire (2) including a tread (4) configured to come into contact with a road surface, a belt (16) located radially inward of the tread (4), and a band (18) located between the tread (4) and the belt (16) in a radial direction and covering the belt, the method comprising the steps of:
preparing a green tire for the tire; and
vulcanizing the green tire, wherein
in the green tire preparation step,
the band (18) is formed by winding a belt-shaped band strip (58) onto the belt (16) while applying a load to the band strip (58),
the band strip (58) is a cord array in which a plurality of band cords (60) are arranged,
a zone from a first end (34a) to a second end (34b) of the belt is a control zone in which tension of the band cords (60) is controlled,
**characterized in that**
the band (18) is formed by helically winding the belt-shaped band strip (58) onto the belt (16),
a load applied to the band cords (60) in the control zone is not less than 15.0 N,
the control zone includes a crown zone (Cr) and a pair of shoulder zones (Sh1, Sh2) located axially outward of the crown zone (Cr), and
a load applied to the band cords (60) in the crown zone (Cr) is higher than a load applied to the band cords (60) in each shoulder zone (Sh1, Sh2).

## Patentansprüche

1. Reifen (2), umfassend:
eine Lauffläche (4), die konfiguriert ist, um mit einer Straßenoberfläche in Kontakt zu kommen;
einen Gürtel (16), der sich radial innen von der Lauffläche (4) befindet; und
ein Band (18), das sich in einer radialen Richtung zwischen der Lauffläche und dem Gürtel befindet und auf den Gürtel (16) gestapelt ist, wobei
der Gürtel (16) eine große Anzahl von Gürtelkorden (44) umfasst, die miteinander ausgerichtet sind,
jeder der Gürtelkorde (44) relativ zu einer Umfangsrichtung geneigt ist,
das Band (18) einen Bandkord (60) umfasst, der sich im Wesentlichen in der Umfangsrichtung erstreckt,
der Bandkord (60) ein organischer Faserkord ist,
das Band (18) aus einem Bandstreifen (58) besteht,
der Bandstreifen (58) eine Kordanordnung ist, in der eine Vielzahl der Bandkorde (60) angeordnet ist,
eine Zone von einem ersten Ende (64a) zu einem zweiten Ende (34b) des Gürtels (16) eine Kontrollzone ist, in der die Spannung der Bandkorde (60) kontrolliert wird,
die Restspannung der Bandkorde (60) in der Kontrollzone nicht weniger als 15,0 N beträgt,
die Kontrollzone eine Kronenzone (Cr) und ein Paar Schulterzonen (Sh1, Sh2) umfasst, die sich axial außen von der Kronenzone (Cr) befinden,
die Restspannung der Bandkorde (60) in der Kronenzone (Cr) höher ist als die Restspannung der Bandkorde in jeder Schulterzone (Sh1, Sh2),
**dadurch gekennzeichnet, dass**
das Band (18) aus einem spiralförmig gewickelten Bandstreifen (58) besteht, und
ein Verhältnis einer Äquator-Bodenkontaktlänge, gemessen entlang einer Äquatorebene (CL) des Reifens (2) auf einer Referenz-Bodenkontaktoberfläche, erhalten durch Inkontaktbringen des Reifens mit einer flachen Straßenoberfläche mit einer vertikalen Last, die 70 % einer normalen Last des Reifens beträgt, die auf den Reifen in einem Zustand aufgebracht wird, in dem der Reifen auf eine normale Felge aufgezogen ist, ein Innendruck des Reifens auf einen normalen Innendruck eingestellt ist und ein Sturzwinkel des Reifens auf 0° eingestellt ist, zu einer Referenz-Bodenkontaktlänge an einer Position, die einer Breite entspricht, die 80 % einer maximalen Bodenkontaktbreite beträgt, als ein Formindex (F) definiert ist, und
der Formindex nicht kleiner als 1,00 und nicht größer als 1,30 ist.

2. Reifen (2) nach Anspruch 1, wobei ein Verhältnis der Restspannung der Bandkorde (60) in jeder Schulterzone (Sh1, Sh2) zu der Restspannung der Bandkorde (60) in der Kronenzone (Cr) nicht kleiner als 0,50 ist.

3. Reifen (2) nach Anspruch 1 oder 2, wobei die Restspannung der Bandkorde (60) in der Kronenzone (Cr) nicht größer als 50 N ist.

4. Reifen (2) nach einem der Ansprüche 1 bis 3, wobei eine Dehnungsrate unter konstanter Last des Bandkords (60), erhalten gemäß JIS L 1017, nicht kleiner als 1,9 % und nicht größer als 8,4 % ist.

5. Reifen (2) nach einem der Ansprüche 1 bis 4, wobei eine Breite in einer axialen Richtung jeder Schulterzone (Sh1, Sh2) nicht kleiner als 1/8 und nicht größer als 3/8 einer Breite in der axialen Richtung der Kontrollzone (Cr) ist.

6. Reifen (2) nach einem der Ansprüche 1 bis 5, wobei
die Lauffläche (4) eine Laufflächenoberfläche (20) umfasst, die mit der Straßenoberfläche in Kontakt kommt,
in einem Meridianquerschnitt des Reifens (2) eine Konturlinie der Laufflächenoberfläche (20) eine Vielzahl von Bögen umfasst, die in der axialen Richtung ausgerichtet sind,
die Vielzahl von Bögen einen ersten Bogen, der sich in der Mitte in der axialen Richtung befindet, ein Paar zweiter Bögen, die sich axial außen von dem ersten Bogen befinden, und ein Paar dritter Bögen, die sich axial außen von den zweiten Bögen befinden, umfasst,
eine Position auf der Laufflächenoberfläche (20), die der Grenze (CS) zwischen der Kronenzone (Cr) und der Schulterzone (Sh1, Sh2) entspricht, eine der Grenze (CS) entsprechende Position ist, und
die der Grenze entsprechende Position sich axial außen von einer Grenze (CM) zwischen dem ersten Bogen und dem zweiten Bogen befindet.

7. Reifen (2) nach Anspruch 6, wobei die der Grenze entsprechende Position sich axial innen von der Grenze (MS) zwischen dem zweiten Bogen und dem dritten Bogen befindet.

8. Reifen (2) nach Anspruch 6 oder 7, wobei
die Vielzahl von Bögen ein Paar Schulterbögen umfasst, die sich axial außen von den dritten Bögen befinden,
jeder Schulterbogen einen kleinsten Radius unter der Vielzahl von Bögen aufweist, die in der Konturlinie der Laufflächenoberfläche enthalten sind,
eine Position auf der Laufflächenoberfläche, die dem Bodenkontaktende der Referenz-Bodenkontaktoberfläche entspricht, eine Referenz-Bodenkontaktposition ist, und
die Referenz-Bodenkontaktposition sich axial innen von der Grenze (SS) zwischen dem dritten Bogen und dem Schulterbogen befindet.

9. Verfahren zum Herstellen eines Reifens (2), der eine Lauffläche (4), die konfiguriert ist, um mit einer Straßenoberfläche in Kontakt zu kommen, einen Gürtel (16), der sich radial innen von der Lauffläche (4) befindet, und ein Band (18) umfasst, das sich in einer radialen Richtung zwischen der Lauffläche (4) und dem Gürtel (16) befindet und den Gürtel bedeckt, wobei das Verfahren die folgenden Schritte umfasst:
Vorbereiten eines Rohreifens für den Reifen; und
Vulkanisieren des Rohreifens, wobei
in dem Rohreifen-Vorbereitungsschritt
das Band (18) durch Wickeln eines gürtelförmigen Bandstreifens (58) auf den Gürtel (16) gebildet wird, während eine Last auf den Bandstreifen (58) aufgebracht wird,
der Bandstreifen (58) eine Kordanordnung ist, in der eine Vielzahl von Bandkorden (60) angeordnet ist,
eine Zone von einem ersten Ende (34a) zu einem zweiten Ende (34b) des Gürtels eine Kontrollzone ist, in der die Spannung der Bandkorde (60) kontrolliert wird,
**dadurch gekennzeichnet, dass**
das Band (18) durch spiralförmiges Wickeln des gürtelförmigen Bandstreifens (58) auf den Gürtel (16) gebildet wird,
eine Last, die auf die Bandkorde (60) in der Kontrollzone aufgebracht wird, nicht weniger als 15,0 N beträgt,
die Kontrollzone eine Kronenzone (Cr) und ein Paar Schulterzonen (Sh1, Sh2) umfasst, die sich axial außen von der Kronenzone (Cr) befinden, und
eine Last, die auf die Bandkorde (60) in der Kronenzone (Cr) aufgebracht wird, höher ist als eine Last, die auf die Bandkorde (60) in jeder Schulterzone (Sh1, Sh2) aufgebracht wird.

## Revendications

1. Pneumatique (2) comprenant :
une bande de roulement (4) configurée pour venir en contact avec une surface routière ;
une ceinture (16) située radialement à l'intérieur de la bande de roulement (4) ; et
une bande (18) située entre la bande de roulement et la ceinture dans une direction radiale et empilée sur la ceinture (16), dans lequel
la ceinture (16) inclut un grand nombre de câblés de ceinture (44) alignés les uns avec les autres,
chacun des câblés de ceinture (44) est incliné relativement à une direction circonférentielle,
la bande (18) inclut un câblé de bande (60) s'étendant sensiblement dans la direction circonférentielle,
le câblé de bande (60) est un câblé de fibres organiques,
la bande (18) est composée d'un ruban de bande (58),
le ruban de bande (58) est un agencement de câblés dans lequel sont agencés une pluralité de câblés de bande (60),
une zone depuis une première extrémité (64a) jusqu'à une seconde extrémité (34b) de la ceinture (16) est une zone de contrôle dans laquelle une tension des câblés de bande (60) est contrôlée,
une tension résiduelle des câblés de bande (60) dans la zone de contrôle n'est pas inférieure à 15,0 N,
la zone de contrôle inclut une zone de couronne (Cr) et une paire de zones d'épaulement (Sh1, Sh2) situées axialement à l'extérieur de la zone de couronne (Cr),
une tension résiduelle des câblés de bande (60) dans la zone de couronne (Cr) est plus élevée qu'une tension résiduelle des câblés de bande dans chaque zone d'épaulement (Sh1, Sh2),
**caractérisé en ce que**
la bande (18) est composée d'un ruban de bande enroulé de manière hélicoïdale (58), et
un rapport d'une longueur de contact au sol d'équateur mesurée le long d'un plan d'équateur (CL) du pneumatique (2) sur une surface de contact au sol de référence obtenue en amenant le pneumatique en contact avec une surface routière plate avec une charge verticale, qui est de 70 % d'une charge normale du pneumatique, appliquée sur le pneumatique dans un état dans lequel le pneumatique est monté sur une jante normale, une pression interne du pneumatique est ajustée à une pression interne normale, et un angle de cambrure du pneumatique est fixé à 0°, sur une longueur de contact au sol de référence à une position correspondant à une largeur qui est de 80 % d'une largeur de contact au sol maximum, est défini à titre d'indice de forme (F), et
l'indice de forme n'est pas inférieur à 1,00 et n'est pas supérieur à 1,30.

2. Pneumatique (2) selon la revendication 1, dans lequel un rapport de la tension résiduelle des câblés de bande (60) dans chaque zone d'épaulement (Sh1, Sh2) sur la tension résiduelle des câblés de bande (60) dans la zone de couronne (Cr) n'est pas inférieur à 0,50.

3. Pneumatique (2) selon la revendication 1 ou 2, dans lequel la tension résiduelle des câblés de bande (60) dans la zone de couronne (Cr) n'est pas supérieure à 50 N.

4. Pneumatique (2) selon l'une quelconque des revendications 1 à 3, dans lequel un taux d'allongement sous une charge constante du câblé de bande (60), obtenu selon la norme industrielle japonaise JIS L 1017, n'est pas inférieur à 1,9 % et n'est pas supérieur à 8,4 %.

5. Pneumatique (2) selon l'une quelconque des revendications 1 à 4, dans lequel une largeur dans une direction axiale de chaque zone d'épaulement (Sh1, Sh2) n'est pas inférieure à 1/8 et n'est pas supérieure à 3/8 d'une largeur dans la direction axiale de la zone de contrôle (Cr).

6. Pneumatique (2) selon l'une quelconque des revendications 1 à 5, dans lequel
la bande de roulement (4) inclut une surface de bande de roulement (20) qui vient en contact avec la surface routière,
dans une section transversale méridienne du pneumatique (2), une ligne de contour de la surface de bande de roulement (20) inclut une pluralité d'arcs alignés dans la direction axiale,
la pluralité d'arcs incluent un premier arc situé au niveau du centre dans la direction axiale, une paire de deuxièmes arcs situés axialement à l'extérieur du premier arc, et une paire de troisièmes arcs situés axialement à l'extérieur des deuxièmes arcs,
une position, sur la surface de bande de roulement (20), correspondant à la frontière (CS) entre la zone de couronne (Cr) et la zone d'épaulement (Sh1, Sh2) est une position de correspondance de frontière (CS), et
la position de correspondance de frontière est située axialement à l'extérieur d'une frontière (CM) entre le premier arc et le deuxième arc.

7. Pneumatique (2) selon la revendication 6, dans lequel
la position de correspondance de frontière est située axialement à l'intérieur de la frontière (MS) entre le deuxième arc et le troisième arc.

8. Pneumatique (2) selon la revendication 6 ou 7, dans lequel
la pluralité d'arcs incluent une paire d'arcs d'épaulement situés axialement à l'extérieur des troisièmes arcs,
chaque arc d'épaulement a un rayon le plus petit parmi la pluralité d'arcs inclus dans la ligne de contour de la surface de bande de roulement,
une position, sur la surface de bande de roulement, correspondant à l'extrémité de contact au sol de la surface de contact au sol de référence, est une position de contact au sol de référence, et
la position de contact au sol de référence est située axialement à l'intérieur de la frontière (SS) entre le troisième arc et l'arc d'épaulement.

9. Procédé de production d'un pneumatique (2) incluant une bande de roulement (4) configurée pour venir en contact avec une surface routière, une ceinture (16) située radialement à l'intérieur de la bande de roulement (4), et une bande (18) située entre la bande de roulement (4) et la ceinture (16) dans une direction radiale et recouvrant la ceinture, le procédé comprenant les étapes consistant à :
préparer un pneumatique cru pour le pneumatique ; et
vulcaniser le pneumatique cru, dans lequel
dans l'étape de préparation du pneumatique cru,
la bande (18) est formée en enroulant un ruban de bande en forme de ceinture (58) sur la ceinture (16) tout en appliquant une charge sur le ruban de bande (58),
le ruban de bande (58) est un agencement de câblés dans lequel sont agencés une pluralité de câblés de bande (60),
une zone depuis une première extrémité (34a) jusqu'à une seconde extrémité (34b) de la ceinture est une zone de contrôle dans laquelle une tension des câblés de bande (60) est contrôlée,
**caractérisé en ce que**
la bande (18) est formée en enroulant de manière hélicoïdale le ruban de bande en forme de ceinture (58) sur la ceinture (16),
une charge appliquée sur les câblés de bande (60) dans la zone de contrôle n'est pas inférieure à 15,0 N,
la zone de contrôle inclut une zone de couronne (Cr) et une paire de zones d'épaulement (Sh1, Sh2) situées axialement à l'extérieur de la zone de couronne (Cr), et
une charge appliquée sur les câblés de bande (60) dans la zone de couronne (Cr) est plus élevée qu'une charge appliquée sur les câblés de bande (60) dans chaque zone d'épaulement (Sh1, Sh2).
